# EUROPEAN PATENT SPECIFICATION

(11) **EP 1 097 638 B1**
(45) Date of publication and mention of the grant of the patent: **07.04.2004**
(21) Application number: 00309522.1
(22) Date of filing: 27.10.2000
(51) Int. Cl.: A01N 25/04

(54) **Methods for forming stable pesticide dispersions**
Verfahren um stabile pestizide Dispersionen herzustellen
Méthodes pour former des dispersions stables de pesticides

(30) Priority: 08.11.1999 US 164227 P
(43) Date of publication of application: 09.05.2001
(73) Proprietor: ROHM AND HAAS COMPANY, Philadelphia, Pennsylvania 19106-2399 (US)
(72) Inventor: Young, Dana Janon, Philadelphia, Pennsylvania 19150 (US); Machleder, Warren Harvey, Blue Bell, Pennsylvania 19422 (US)
(74) Representative: Buckley, Guy Julian

(56) References cited:
- EP-A- 0 875 142

## Description

The present invention relates to an improved method for forming stable dispersions comprising one or more pesticides in an agricultural oil wherein the pesticide has a particle size less than 10 µm and a melting point from 50 °C to 250 °C, provided that the pesticide is stable at or above its melting point, and the dispersion comprises an oil-soluble polymer, wherein the polymer has a weight average molecular weight from 3,000 to 400,000 and comprises 2.5-35 % by weight of a copolymerized polar monomer.

European Patent Application No. 0 875 142 A1, published November 4, 1998, discloses a variety of stable pesticide dispersions made using an agricultural oil and an oil-soluble polymer, wherein the polymer has a weight average molecular weight from 3,000 to 120,000 atomic mass units ("AMU") and includes 2.5-35 % by weight of a copolymerized polar monomer.

Unfortunately, many pesticide dispersions prepared using the method disclosed in EP 0 875 142 suffer from significant drawbacks, particularly when the pesticide has a low melting point, that is, between 50 °C and 100 °C. Such drawbacks include failure to maintain stability, larger than desired initial pesticide particle size, or low pesticide content in the final dispersion.

We have discovered a modification to the dispersion preparation process disclosed in EP 0 875 142 which results in improved dispersions which exhibit one or more of the following advantages over dispersions produced by the previously disclosed process: the dispersion exhibits enhanced stability; the initial particle size of the pesticide is smaller; and/or the amount of pesticide in the dispersion (i.e. pesticide loading) is increased. In addition, the modified method is applicable to a broader range of pesticides and oil-soluble polymers than those disclosed in EP 0 875 142. This modification comprises melting the pesticide during preparation of the dispersion.

This invention, therefore, is a method to prepare a stable pesticide dispersion comprising the steps of:
a) admixing a pesticide with an agricultural oil and an oil-soluble polymer;
b) heating the mixture to a temperature above the melting point of the pesticide until the pesticide melts; and
c) mixing the admixture until a homogeneous blend is obtained.
wherein:
a) the pesticide has a melting point of from 50 °C to 250 °C; is stable at its melting point; and has a particle size less than 10 microns in the dispersion; and
b) the oil-soluble polymer has a weight average molecular weight of from 3,000 to 400,000 AMU, and comprises 2.5-35 percent, by weight, of a copolymerized polar monomer, and from 65 to 97.5 percent, by weight, of an alkyl methacrylate, an alkyl acrylate, or mixture thereof wherein the alkyl groups of each such methacrylate or acrylate independently contain from 1 to 24 carbon atoms with an average of from 7 to 20 carbon atoms.

The mixing (homogenization) may be continuous during the heating process or initiated after the temperature of the admixture is above the melting point of the pesticide.

Optionally, the pesticide may be melted prior to admixture with the agricultural oil and the oil-soluble polymer and the admixture is then mixed (homogenized) until a homogeneous blend is obtained. This option does not require that the admixture itself be heated. For these options the process comprises the steps of:
a) melting the pesticide;
b) admixing the melted pesticide with an agricultural oil and an oil-soluble polymer; and
c) mixing the admixture until a homogeneous blend is obtained.

The term "stable pesticide dispersion" means a dispersion which does not gel during or after the mixing step. The term "gel" refers to a colloid in which the dispersed phase combines with the continuous phase to produce a viscous, jelly-like product. The stable dispersion is stable relative to a dispersion of the same pesticide prepared in like manner in the absence of the oil-soluble polymer. Preferred are dispersions which, in addition to the absence of gelling, have an initial viscosity less than 2000 centipoise ("cP")cP, preferably less than 1000 cP. More preferred are dispersions which, after standing 1-2 weeks at 54 °C with no gelling, maintain a viscosity less than 2000 cP, preferably less than 1000 cP, there is less than 10% separation of a top clear liquid, and there is little or no formation of sediment on the bottom of the dispersion container.

Pesticides useful in this invention include organic pesticides which are stable at their melting point and in which their melting point is from 50 °C to 250 °C, preferably from 50 °C to 150 °C, more preferably from 50 °C to 100 °C. Preferably the pesticide has a molecular weight greater than 200; low solubility in paraffinic solvents, preferably less than 1% by weight; and contains one or more polar functional groups such as, for example, ester, carbonyl, hydroxy, and cyano. Most preferred are pesticides which are crystalline rather than amorphous. Useful pesticides include fungicides, herbicides, insecticides, and biocides such as, for example, chlorinated nitriles, triazoles such as myclobutanil (Mp 63-68 °C), aralkyl triazoles such as fenbuconazole (Mp 124-126 °C), triazole anilides, amides such as isoxaben (Mp 176-179 °C) and pronamide (Mp 155-156 °C), benzamides such as thifluzamide (Mp 178 °C), , alkyl benzamides such as zoxamide (ISO proposed common name, Mp 167 °C) , diphenyl ethers such as oxyfluorfen (Mp 85-90 °C) , pyridine carboxylic acids such as thiazopyr (Mp 79-81 °C), chloroanilines such as propanil (Mp 91 °C) , organophosphates such as phosmet (Mp 72-73 °C), and mixtures thereof.

The pesticide, the oil-soluble polymer, and the oil may be mixed in any order. Preferably the oil-soluble polymer and the oil are mixed together and then the pesticide is added to the polymer/oil mixture. We have also discovered that improved dispersions result when, in addition to the pesticide, the oil-soluble polymer or the oil-soluble polymer/oil mixture is heated. Preferably the polymer or polymer/oil mixture is heated to from 50 °C to 200 °C prior to admixing with the pesticide. More preferably the polymer or polymer/oil mixture is heated to from 50 °C to 150 °C; even more preferably from 50 °C to 100 °C. Preferably, the polymer is mixed with the oil prior to or during heating.

One skilled in the art will recognize that the mixing step may be accomplished using any one of a variety of apparatus including; for example, rotor/stator homogenizers, in-line emulsifiers, static mixers, piston homogenizers, ultrasonic homogenizers, and high-speed jets or nozzles.

The term "particle size" means the volume average particle diameter as measured, for example, by a laser particle size instrument such as the Coulter LS™ particle sizer (Coulter Instruments).

When it is desired to reduce the pesticide particle size below that obtained in the admixing process, the dispersion may be subjected to a separate milling process. Typical milling procedures which may be used include, for example, hammer milling, crushing (jaw, gyratory cone, roller, impact), impact milling (stationary plates), tumble milling with grinding media (balls, rods), roller milling (feeding through a small gap), and pin milling.

Agricultural oils useful in this invention are oils suitable for agronomic application, typically of high purity, and generally comprised of a single aliphatic compound. They may be branched or linear in nature with typical carbon chain lengths of C₂₀ to C₂₆. They are characterized by low odor, low solvency for organic and organo-metallic compounds, low phytotoxicity to plants, and low volatility. Typical physical characteristics of agricultural oils include; specific gravity of 0.75-0.90 at 16 °C , flash point greater than 49 °C, unsulfonated residue greater than 90%, and a distillation range of 175 °C to 235 °C. Commercial examples of such agricultural oils include: Orchex™ 796 oil, Orchex™ 692 oil, Sunspray™ 7N oil, Sunspray™ 11N oil (Sun Company); Oleo Blanco oil (also known as white oil, Witco Corp. or Pennzoil-Quaker State Company); Isopar™ M oil, Isopar™ V oil, 100 Neutral oil (Chevron Oil Co.), and Exxsol™ D-130 oil (Exxon Corp.). Other non-phytotoxic oils such as mineral oils; crop oils such as, for example, vegetable oil, peanut oil, and cottonseed oil; or synthetic oils are acceptable substitutes for aliphatic oils.

The oil-soluble polymers used in this invention typically are addition polymers comprising a) one or more polar monomers and b) one or more alkyl (meth)acrylates. For purposes of this invention, the term "oil soluble" means that the polymer is miscible in the selected oil at a concentration range up to 20 percent, by weight, polymer to oil plus polymer. The term "alkyl (meth)acrylate" means an alkyl methacrylate or alkyl acrylate wherein the alkyl group contains from 1 to 24 carbon atoms such as, for example, methyl methacrylate (MMA), methyl acrylate, ethyl acrylate, propyl methacrylate, butyl methacrylate (BMA), butyl acrylate (BA), isobutyl methacrylate (IBMA), hexyl and cyclohexyl methacrylate, cyclohexyl acrylate, 2-ethylhexyl acrylate (EHA), 2-ethylhexyl methacrylate, octyl methacrylate, decyl methacrylate, isodecyl methacrylate (IDMA, based on branched C₁₀-alkyl isomer mixture), undecyl methacrylate, dodecyl methacrylate (also known as lauryl methacrylate), tridecyl methacrylate, tetradecyl methacrylate (also known as myristyl methacrylate), pentadecyl methacrylate, dodecyl-pentadecyl methacrylate (DPMA, a mixture of linear and branched isomers of dodecyl, tridecyl, tetradecyl and pentadecyl methacrylates), lauryl-myristyl methacrylate (LMA, a mixture of dodecyl and tetradecyl methacrylates), hexadecyl methacrylate, heptadecyl methacrylate, octadecyl methacrylate, nonadecyl methacrylate, eicosyl methacrylate, behenyl methacrylate (BehMA), cetyl-eicosyl methacrylate (CEMA, a mixture of hexadecyl, octadecyl and eicosyl methacrylate), and cetyl-stearyl methacrylate (SMA, a mixture of hexadecyl and octadecyl methacrylate), and combinations thereof.

The alkyl methacrylate and alkyl acrylate monomers described above are generally prepared by standard esterification procedures using technical grades of long chain aliphatic alcohols. Commercially available alcohols are typically mixtures of alcohols of varying chain lengths containing between 10 and 15 or 16 and 20 carbon atoms in the alkyl group. Consequently, for the purposes of this invention, alkyl (meth)acrylate is intended to include not only the individual alkyl (meth)acrylate product named, but also to include mixtures of the alkyl (meth)acrylates with a predominant amount of the particular alkyl (meth)acrylate named. The use of these commercially available alcohols to prepare acrylate and methacrylate esters results in the LMA, DPMA, SMA and CEMA monomer mixtures described above.

The polar monomers may contain, for example hydroxy groups or nitrogen-containing groups. Preferably, the polar monomers contain one or more hydroxyl, carboxylic acid, basic nitrogen, or heterocyclic functionality. Examples of such polar monomers include hydroxyalkyl(meth)acrylates such as hydroxypropyl methacrylate (HPMA), dialkylamino(C₁-C₈)alkyl (meth)acrylates such as dimethylaminoethyl methacrylate (DMAEMA) and dialkylamino(C₁-C₈)alkyl (meth)acrylamides such as dimethylaminopropyl methacrylamide (DMAPMAm), vinylpyridine, 2-methyl-5-vinylpyridine, 2-ethyl-5-vinylpyridine, 3-methyl-5-vinylpyridine, 2,3-dimethyl-5-vinylpyridine, 2-methyl-3-ethyl-5-vinylpyridine, methyl-substituted quinolines and isoquinolines, 1-vinylimidazole, 2-methyl-1-vinylimidazole(MVI), N-vinylcapro-lactam, N-vinylbutyrolactam and N-vinylpyrrolidone(NVP).

To achieve oil solubility in a typical agricultural oil, the alkyl side chains of the acrylate/methacrylate monomers should average at least about C₇-C₉. However, in order to maintain oil solubility as the amount of the polar monomer in the polymer increases, the average chain length of the alkyl side chains in the (meth)acrylate comonomers must also increase. As a result, a polymer that contains greater than 10% by weight of copolymerized DMAPMAm (basic nitrogen) or copolymerized HPMA (free hydroxyl) typically requires a greater amount of alkyl side chains containing C₁₆-C₁₈ alkyl rather than C₇-C₉ alkyl groups. Preferred are polymers comprising copolymers of C₁₂- C₂₀ methacrylates with 10-15 % by weight of DMAPMAm. More preferred are polymers comprising copolymers of stearyl methacrylate (SMA) with 10-20 % by weight of DMAPMAm. Small amounts of shorter alkyl side chain monomers may be included in the polymer with a corresponding increase in the proportion of longer alkyl side chain monomers such as, for example, polymers comprising copolymers of CEMA, LMA, and IBMA in combination with the polar monomer NPV.

The weight average molecular weight of the polymer may vary from 3,000 to 400,000 AMU depending on the pesticide to be dispersed. The polymer molecular weight has a direct effect on the viscosity of the formulation; higher molecular weight typically results in higher solution viscosity which often results in decreased pesticide particle mobility and delayed separation and settling. Unfortunately, higher solution viscosity may also hinder the flowability, transfer, and dilution of the pesticide dispersion when diluted. To balance these two opposing properties, preferred are weight average molecular weights of 3,000 to 120,000 AMU, more preferably 15,000 to 90,000; even more preferred are weight average molecular weights of 20,000 to 75,000.

Due to the large number of interactions encountered in mixing together the pesticide, the oil soluble polymer, and the agricultural oil, not all combinations will provide a stable pesticide dispersion. However, by considering the factors described above, one skilled in the art can optimize the combination with only a limited amount of experimentation. The following polymers should be evaluated to determine trends in functionality which will provide a formulation with the desired properties. Data obtained from these initial trials will enable fine-tuning of the final formulation properties.

**Table 1**

| Composition | Monomer Weight % | Mol. wt. |
|---|---|---|
| CEMA/LMA/IBMA/NPV graft | 42.5/42.5/10/5 | <75,000 |
| CEMA/LMA/BMA/NVP | 40/40/10/10 | <75,000 |
| CEMA/LMA/BMA/NVP | 37.5/37.5/10/15 | <75,000 |
| CEMA/LMA/IBMA/HPMA | 42.5/42.5/10/5 | <75,000 |
| CEMA/LMA/BMA/HPMA | 40/40/10/10 | <75,000 |
| CEMA/LMA/BMA/HPMA | 37.5/37.5/10/15 | <75,000 |
| CEMA/LMA/IBMA/DMAPMAm | 42.5/42.5/10/5 | <75,000 |
| CEMA/LMA/BMA/DMAPMAm | 40/40/10/10 | <75,000 |
| CEMA/LMA/BMA/DMAPMAm | 37.5/37.5/10/15 | <75,000 |
| SMA/DMAPMAm | 85/15 | 25-50,000 |

The polymers are typically made using standard procedures by mixing the monomers in the presence of a polymerization initiator, an agricultural oil and, optionally, a chain transfer agent. These processes are described in detail in European Patent Application No. 0 875 142 A1. The reaction may be run under agitation in an inert atmosphere at a temperature of from 60 to 140 °C for 4 to 10 hours or until the desired degree of polymerization is reached. As is recognized by those skilled in the art, the time and temperature of the reaction are dependent on the choice of initiator and can be varied accordingly. Polymers may be prepared by techniques known in the art to form graft polymers, block copolymers, star copolymers, or variable composition copolymers as well as random copolymers.

Initiators useful for this polymerization are any of the well known free-radical-producing compounds such as peroxy, hydroperoxy and azo initiators including acetyl peroxide, benzoyl peroxide, lauroyl peroxide, *t*-butyl peroxyisobutyrate, caproyl peroxide, cumene hydroperoxide, 1,1-di(*t*-butylperoxy)-3,3,5-tri-methylcyclohexane, azobisisobutyronitrile, 2,2'azobis(2-methylbutane nitrile), and *t*-butyl peroctoate. The initiator concentration is normally between 0.025 and 5% by weight based on the total weight of the monomers. Chain transfer agents may also be added to the polymerization reaction to control the molecular weight of the polymer. Preferred chain transfer agents are alkyl mercaptans such as lauryl (dodecyl) mercaptan. The concentration of chain transfer agent used is from about 0.1 to about 10% by weight.

Compositions and physical characteristics of typical polymers which are useful in this invention are presented in Table 2 below.

**Table 2**

| Polymer Compositions and physical characteristics | | | |
|---|---|---|---|
| No. | Composition | Monomer Weight % | Mol. wt. |
| 1 | BehMA/DMAPMAm | 90/10 | 29,400 |
| 2 | BehMA/DMAPMAm | 90/10 | 54,500 |
| 3 | BehMA/LMA/DMAPMAm | 48/37/15 | 28,500 |
| 4 | CEMA/IDMA/MMA | 28/62/10 | 49,600 |
| 5 | CEMA/IDMA/MMA/DMAPMAm | 25.2/55.8/9/10 | 31,400 |
| 6 | CEMA/IDMA/MMA/DMAPMAm | 26.5/58.9/9.5/5 | 57,900 |
| 7 | CEMA/LMA/DMAPMAm | 15/65/20 | 35,000 |
| 8 | CEMA/LMA/DMAPMAm | 4.5/91.5/4 | 45,900 |
| 9 | CEMA/LMA/IBMA/DMAPMAm | 37.5/37.5/10/15 | 37,900 |
| 10 | CEMA/LMA/IBMA/DMAPMAm | 37.5/37.5/10/15 | 45,200 |
| 11 | CEMA/LMA/IBMA/DMAPMAm | 40/40/10/10 | 31,700 |
| 12 | CEMA/LMA/IBMA/DMAPMAm | 42.5/42.5/10/5 | 35,300 |
| 13 | CEMA/LMA/IBMA/HPMA | 37.5/37.5/10/15 | 65,800 |
| 14 | CEMA/LMA/IBMA/HPMA | 40/40/10/10 | 40,000 |
| 15 | CEMA/LMA/IBMA/HPMA/NVP | 40/40/10/2/8 | 50,400 |
| 16 | CEMA/LMA/IBMA/NVP | 32.7/43.8/13.7/9.8 | 334,000 |
| 17 | CEMA/LMA/IBMA/NVP | 37.5/37.5/10/15 | 63,900 |
| 18 | CEMA/LMA/IBMA/ NVP | 39.5/39.5/10.5/10.5 | 59,800 |
| 19 | CEMA/LMA/IBMA/NVP | 40/40/10/10 | ~20,000 |
| 20 | CEMA/LMA/IBMA/ NVP | 40/40/10/10 | ~40,000 |
| 21 | CEMA/LMA/IBMA/ NVP | 40/40/10/10 | 54,100 |
| 22 | CEMA/LMA/IBMA/NVP | 40/40/10/10 | 64,400 |
| 23 | CEMA/LMA/IBMA/ NVP | 40/40/10/10 | 83,100 |
| 24 | CEMA/LMA/IBMA/ NVP | 40/40/10/10 | 107,500 |
| 25 | CEMA/LMA/IBMA/ NVP | 40/40/10/10 | 154,500 |
| 26 | CEMA/LMA/IBMA/ NVP | 40/40/10/10 | 222,200 |
| 27 | CEMA/LMA/IBMA/ NVP | 42.5/42.5/10/5 | 55,300 |
| 28 | CEMA/LMA/IBMA/ NVP graft | 40/40/10/10 | 36,300 |
| 29 | CEMA/LMA/IBMA/ NVP graft | 42.5/42.5/10/5 | |
| 30 | CEMA/LMA/IBMA/ NVP graft | 42.5/42.5/10/5 | 40,800 |
| 31 | CEMA/LMA/IBMA/ NVP graft | 42.5/42.5/10/5 | 46,600 |
| 32 | CEMA/LMA/IBMA/NVP | 32.7/43.8/13.7/9.8 | 256,000 |
| 33 | IDMA/DMAPMAm | 85/15 | 19,700 |
| 34 | IDMA/MMA | 80/20 | 49,400 |
| 35 | IDMA/NVP | 85/15 | 36,500 |
| 36 | IDMA/NVP | 90/10 | 28,200 |
| 37 | IDMA/NVP | 90/10 | 33,700 |
| 38 | IDMA/NVP | 90/10 | 39,900 |
| 39 | IDMA/NVP | 95/5 | 32,200 |
| 40 | LMA | 100 | 55,200 |
| 41 | LMA/DMAPMAm | 60/40 | 18,700 |
| 42 | LMA/DMAPMAm | 90/10 | 32,700 |
| 43 | LMA/HPMA | 90/10 | 64,800 |
| 44 | LMA/IDMA | 50/50 | 49,100 |
| 45 | LMA/MMA | 86.2/13.2 | 47,900 |
| 46 | LMA/MMA | 90/10 | 47,900 |
| 47 | LMA/NVP | 80/20 | 68,000 |
| 48 | LMA/NVP | 90/10 | 68,800 |
| 49 | SMA/DMAEMA | 80/20 | 52,300 |
| 50 | SMA/DMAEMA | 90/10 | 50,600 |
| 51 | SMA/DMAEMA | 95/5 | 49,200 |
| 52 | SMA/DMAPMAm | 60/40 | 17,600 |
| 53 | SMA/DMAPMAm | 70/30 | 20,000 |
| 54 | SMA/DMAPMAm | 80/20 | 20,600 |
| 55 | SMA/DMAPMAm | 80/20 | 25,600 |
| 56 | SMA/DMAPMAm | 85/15 | 18,600 |
| 57 | SMA/DMAPMAm | 85/15 | 20,800 |
| 58 | SMA/DMAPMAm | 85/15 | 22,000 |
| 59 | SMA/DMAPMAm | 85/15 | 25,900 |
| 60 | SMA/DMAPMAm | 85/15 | 25,900 |
| 61 | SMA/DMAPMAm | 85/15 | 27,600 |
| 62 | SMA/DMAPMAm | 85/15 | 32,800 |
| 63 | SMA/DMAPMAm | 85/15 | 43,000 |
| 64 | SMA/DMAPMAm | 85/15 | 85,000 |
| 65 | SMA/DMAPMAm | 85/15 | 94,000 |
| 66 | SMA/DMAPMAm | 85/15 | 180,000 |
| 67 | SMA/DMAPMAm | 85/15 | 200,000 |
| 68 | SMA/DMAPMAm | 90/10 | 35,300 |
| 69 | SMA/DMAPMAm | 90/10 | 88,200 |
| 70 | SMA/DMAPMAm | 90/10 | 94,000 |
| 71 | SMA/DMAPMAm | 95/5 | 44,400 |
| 72 | SMA/DMAPMAm | 95/5 | 77,700 |
| 73 | SMA/DMAPMAm (5% grafted) | 90/10 | 50,600 |
| 74 | SMA/DMAPMAm (toluene) | 90/10 | 27,200 |
| 75 | SMA/IDMA | 50/50 | 56,600 |
| 76 | SMA/IDMA/MMA/HPMA | 30.3/60.7/4/5 | 302,000 |
| 77 | SMA/IDMA/MMA/NVP | 30/56/10/4 | 237,000 |
| 78 | SMA/LMA/DMAPMAm | 31.5/58.5/10 | 28,600 |
| 79 | SMA/LMA/HPMA | 15/65/20 | 14,000 |
| 80 | SMA/LMA/NVP | 31.5/58.5/10 | 46,700 |
| 81 | SMA/MVI | 90/10 | 73,900 |

In a spray tank, the dispersions of this invention are typically diluted by oil alone, water alone, an oil/water/surfactant mixture, or a water/surfactant mixture and then applied in the field using methods commonly employed, such as conventional high-volume hydraulic sprays, low-volume sprays, air-blast, and aerial sprays. When water is used alone, a surfactant, which acts as an emulsifier, is also required. The surfactant may be included as a component of the dispersion or added to the spray tank separately. Preferred surfactants include ethoxylated secondary alcohols with a C₁₂-C₁₄ chain length or mixtures of ethoxylated alcohols with alkyl benzene sulfonates, preferably calcium dodecylbenzene sulfonates, or those based on trisiloxane. The dilution and rate of application will depend upon the type of equipment employed, the method and frequency of application desired, the pesticide, the pest to be controlled, and the crop to be treated. It is usually desirable, particularly in the case of foliar spray formulations, to include adjuvants, such as wetting agents, spreading agents, dispersing agents, stickers, adhesives and the like in accordance with agricultural practices. Such adjuvants commonly used in the art can be found in *McCutcheon's Emulsifiers and Detergents, McCutcheon's Emulsifiers and Detergents*/*Functional Materials*, and *McCutcheon's Functional Materials* all published annually by McCutcheon Division of MC Publishing Company (New Jersey) and *Farm Chemicals Handbook* published by Meister Publishing Company (Ohio).

The following examples illustrate several aspects of this invention in detail:

### GENERAL PROCEDURE USED FOR EXAMPLES

Five hundred grams of pesticide is weighed into a 1 liter polyethylene coated jar and heated to a temperature above its melting point until melted. The oil-soluble polymer and the oil are mixed in a stainless steel beaker and heated to 50 °C. The polymer/oil mixture is then agitated using an overhead homogenizer at low (9500-13500 rpm) speed. The melted pesticide is then added slowly to the polymer/oil mixture. As the pesticide content increases, the homogenizer speed is increased to compensate for thickening of the sample. The total homogenation time and rate must be kept to a minimum, that is, the shortest time and lowest rate which provide a homogeneous blend. This avoids flocculation (clumping) of the dispersion.

Samples may then be bead milled to further reduce the particle size in an Eiger mill for approximately 4 minutes at a minimum of 3500 rpm.

### Example 1:

Propanil technical (200 g.) was weighed into a 1 liter polyethylene ("PE") coated jar. The technical was melted at a temperature of 93°C overnight. The melted technical was left in the oven until just before it was to be added to the oil/polymer mixture.

Oleo Branco oil (158 g.) in a stainless steel beaker was combined with an oil-soluble polymer (polymer example 48, 30 g). The mixture was hand mixed with a spatula until uniform. The oil and polymer were then heated on a hot plate to 50°C and held constant at this temperature.

The warm oil/polymer mixture was positioned under a homogenizer (Ultra-Turrax™ T-25 homogenizer, Ika Labortechnica) supported by the hotplate and a jack stand. The homogenizer was turned on at very low speed (approximately 8000 rpm) and the oil/polymer mixture was agitated. The melted technical was removed from the oven and slowly added to the oil/polymer mixture. As the solid content increased, the speed of the homogenizer was increased to help mix the thickening sample. When the mixture became homogeneous, agitation was stopped and the mixture allowed to cool to room temperature.

Samples were then bead milled for various lengths of time to further reduce the particle size using the following procedure:

Approximately 25-30 ml of 1 mm glass beads are loaded into the bead chamber of a 50 ml Eiger™ mill (Model M50 from Eiger Machinery, Inc.). The mill is cooled using water at a temperature of approximately -10 °C. The sample is added to the mill. The sample is milled for from 4 to 15 minutes at 3500 rpm. After milling until there are signs of thickening, the sample is discharged from the milling chamber. The milling process heats the sample to above room temperature. After the sample is cooled to room temperaure, optional surfactant is added using a magnetic stirrer to provide agitation for approximately 30 minutes. This results in a visually homogeneous product with a propanil particle size of from 0.5 µm to 10 µm
Samples prepared in this fashion had the following properties:

| Samples prepared in this fashion had the following properties: | |
|---|---|
| Time | Property Observed |
| After cooling | Free flowing liquid |
| 3 days at | Less than 1% separation |
| Room Temp. | No sedimentation |
| | No gelling |
| 4-5 months. | Less than 5% separation |
| at Room | No sedimentation |
| Temp. | Minor gelling which disappeared upon stirring |
| 1 week. at | Less than 5% separation |
| 54 °C | No sedimentation |
| | Slight decrease in viscosity |

### Example 2:

The procedure of Example 1 was repeated except that polymer example 20 was used instead of polymer example 48. The product produced with polymer example 20 had properties similar to those of product produced with polymer example 48.

### Comparison Example 1:

When a similar process was followed except that the propanil was not melted prior to homogenation, the sample gelled.

## Claims

1. A method to prepare a stable pesticide dispersion comprising the steps of:
a) admixing a pesticide with an agricultural oil and an oil-soluble polymer;
b) heating the mixture to a temperature above the melting point of the pesticide until the pesticide melts; and
c) mixing the admixture until a homogeneous blend is obtained.
wherein:
a) the pesticide has a melting point of from 50 °C to 250 °C; is stable at its melting point; and has a particle size less than 10 microns in the dispersion; and
b) the oil-soluble polymer has a weight average molecular weight of from 3,000 to 400,000 atomic mass units and comprises 2.5-35 percent, by weight, of a copolymerized polar monomer and from 65 to 97.5 percent, by weight, of an alkyl methacrylate, an alkyl acrylate, or mixture thereof wherein the alkyl groups of each such methacrylate or acrylate independently contain from 1 to 24 carbon atoms with an average of from 7 to 20 carbon atoms.

2. A method to prepare a stable pesticide dispersion comprising the steps of:
a) melting the pesticide;
b) admixing the melted pesticide with an agricultural oil and an oil-soluble polymer; and
c) mixing the admixture until a homogeneous blend is obtained.
wherein:
a) the pesticide has a melting point of from 50 °C to 250 °C; is stable at its melting point; and has a particle size less than 10 microns in the dispersion; and
b) the oil-soluble polymer has a weight average molecular weight of from 3,000 to 400,000 atomic mass units and comprises 2.5-35 % by weight of a copolymerized polar monomer and from 65 to 97.5 percent, by weight, of an alkyl methacrylate, an alkyl acrylate, or mixture thereof wherein the alkyl groups of each such methacrylate or acrylate independently contain from 1 to 24 carbon atoms with an average of from 7 to 20 carbon atoms.

3. The method of claim 2, wherein step b in the process to prepare the dispersion further comprises heating the agricultural oil, the oil-soluble polymer, or both to a temperature of from 50 °C to 200 °C prior to admixing the melted pesticide.

4. The method of claim 1 or claim 2 or claim 3, wherein the polymer has a weight average molecular weight of from 20,000 to 120,000 atomic mass units.

5. The method of claim 1 or claim 2 or claim 3, wherein the polymer comprises 5-20 weight percent of the copolymerized polar monomer.

6. The method of claim 1 or claim 2 or claim 3, wherein the oil-soluble polymer is a copolymer comprising 80-90 percent, by weight, of one or more methacrylates wherein the alkyl groups contain an average of 12 to 20 carbons and 10-20 percent, by weight, of dimethylaminopropyl methacrylamide.

7. The method of claim 1 or claim 2 further comprising after step c, step d comprising milling the homogeneous blend to reduce the pesticide particle size.

## Patentansprüche

1. Verfahren zur Herstellung einer stabilen Pestizid-Dispersion, umfassend die Schritte:
a) das Mischen eines Pestizids mit einem Agrochemie-Öl und einem Öl-löslichen Polymer;
b) das Erwärmen des Gemisches auf eine Temperatur von oberhalb des Schmelzpunkts des Pestizids, bis das Pestizid schmilzt; und
c) das Mischen des Gemisches, bis ein homogenes Blend erhalten wird,
wobei:
a) das Pestizid einen Schmelzpunkt von 50°C bis 250°C aufweist, bei dessen Schmelzpunkt stabil ist und eine Teilchengröße von weniger als 10 µm in der Dispersion aufweist, und
b) das Öl-lösliche Polymer ein Gewichtsmittel des Molekulargewichts von 3.000 bis 400.000 Atommasseneinheiten aufweist und 2,5-35 Gew.-% eines copolymerisierten polaren Monomers und von 65 bis 97,5 Gew.-% eines Alkylmethacrylats, eines Alkylacrylats oder Gemisches davon umfaßt,
wobei die Alkylreste von jedem solchen Methacrylat oder Acrylat unabhängig voneinander 1 bis 24 Kohlenstoffatome mit einem Durchschnitt von 7 bis 20 Kohlenstoffatomen enthält.

2. Verfahren zur Herstellung einer stabilen Pestizid-Dispersion, umfassend die Schritte:
a) das Schmelzen des Pestizids,
b) das Mischen des geschmolzenen Pestizids mit einem Agrochemie-Öl und einem Öl-löslichen Polymer, und
c) das Mischen des Gemisches, bis ein homogenes Blend erhalten wird,
wobei:
a) das Pestizid einen Schmelzpunkt von 50°C bis 250°C aufweist, bei dessen Schmelzpunkt stabil ist und eine Teilchengröße von weniger als 10 µm in der Dispersion aufweist, und
b) das Öl-lösliche Polymer ein Gewichtsmittel des Molekulargewichts von 3.000 bis 400.000 Atommasseneinheiten aufweist und 2,5-35 Gew.-% eines copolymerisierten polaren Monomers und von 65 bis 97,5 Gew.-% eines Alkylmethacrylats, eines Alkylacrylats oder Gemisches davon umfaßt,
wobei die Alkylreste von jedem solchen Methacrylat oder Acrylat unabhängig voneinander 1 bis 24 Kohlenstoffatome mit einem Durchschnitt von 7 bis 20 Kohlenstoffatomen enthält.

3. Verfahren nach Anspruch 2, wobei der Schritt b in dem Verfahren zur Herstellung der Dispersion weiter das Erwärmen des Agrochemie-Öls, des Öl-löslichen Polymers oder von beiden auf eine Temperatur von 50°C bis 200°C vor dem Mischen des geschmolzenen Pestizids umfaßt.

4. Verfahren nach Anspruch 1, 2 oder 3, wobei das Polymer ein Gewichtsmittel des Molekulargewichts von 20.000 bis 120.000 Atommasseneinheiten aufweist.

5. Verfahren nach Anspruch 1, 2 oder 3, wobei das Polymer 5-20 Gew.-% des copolymerisierten polaren Monomers umfaßt.

6. Verfahren nach Anspruch 1, 2 oder 3, wobei das Öl-lösliche Polymer ein Copolymer ist, umfassend 80-90 Gew.-% von einem oder mehreren Methacrylaten, wobei die Alkylreste im Durchschnitt 12 bis 20 Kohlenstoffe enthalten, und 10-20 Gew.-% Dimethylaminopropylmethacrylamid.

7. Verfahren nach Anspruch 1 oder 2, weiter umfassend nach Schritt c den Schritt d, umfassend das Mahlen des homogenen Blends, um die Pestizidteilchengröße zu vermindern.

## Revendications

1. Procédé de préparation d'une dispersion stable d'un pesticide, comprenant les étapes de :
a) mélange d'un pesticide à une huile agricole et à un polymère soluble dans une huile ;
b) chauffage du mélange à une température supérieure au point de fusion du pesticide, jusqu'à ce que le pesticide fonde ; et
c) mélange du produit du mélange jusqu'à obtention d'un mélange homogène, dans lequel :
a) le pesticide a un point de fusion de 50 à 250°C ; il est stable à son point de fusion ; et il a une granulométrie inférieure à 10 micromètres dans la dispersion ; et
b) le polymère soluble dans une huile a une masse moléculaire moyenne en masse de 3000 à 400 000 unités de masse atomique et comprend de 2,5 à 35 % en poids d'un monomère polaire copolymérisé et de 65 à 97,5 % en poids d'un méthacrylate d'alkyle, d'un acrylate d'alkyle ou d'un mélange de ceux-ci, les groupes alkyle de chaque méthacrylate ou acrylate ci-dessus contenant d'une manière indépendante de 1 à 24 atomes de carbone, avec en moyenne 7. à 20 atomes de carbone.

2. Procédé de préparation d'une dispersion stable d'un pesticide, qui comprend les étapes de :
a) fusion du pesticide ;
b) mélange du pesticide fondu à une huile agricole et à un polymère soluble dans une huile ; et
c) mélange du produit du mélange jusqu'à obtention d'un mélange homogène, dans lequel :
a) le pesticide a un point de fusion de 50 à 250°C ; il est stable à son point de fusion ; et il a une granulométrie inférieure à 10 micromètres dans la dispersion ; et
b) le polymère soluble dans une huile a une masse moléculaire moyenne en masse de 3000 à 400 000 unités de masse atomique et comprend de 2,5 à 35 % en poids d'un monomère polaire copolymérisé et de 65 à 97,5 % en poids d'un méthacrylate d'alkyle, d'un acrylate d'alkyle ou d'un mélange de ceux-ci, les groupes alkyle de chaque méthacrylate ou acrylate ci-dessus contenant d'une manière indépendante de 1 à 24 atomes de carbone, avec en moyenne 7 à 20 atomes de carbone.

3. Procédé selon la revendication 2, dans lequel l'étape b du procédé de préparation de la dispersion comprend en outre le chauffage de l'huile agricole, du polymère soluble dans une huile, ou des deux, à une température de 50 à 200°C avant mélange du pesticide fondu.

4. Procédé selon la revendication 1 ou 2 ou 3, dans lequel le polymère a une masse moléculaire moyenne en masse de 20 000 à 120 000 unités de masse atomique.

5. Procédé selon la revendication 1, 2 ou 3, dans lequel le polymère comprend de 5 à 20 % en poids du monomère polaire copolymérisé.

6. Procédé selon la revendication 1, 2 ou 3, dans lequel le polymère soluble dans une huile est un copolymère comprenant 80 à 90 % en poids d'un ou plusieurs méthacrylates, les groupes alkyle contenant en moyenne 12 à 20 atomes de carbone, et 10 à 20 % en poids de diméthylaminopropylméthacrylamide.

7. Procédé selon la revendication 1 ou 2, qui comprend en outre, après l'étape c, une étape d qui comprend le broyage du mélange homogène, pour réduire la granulométrie du pesticide.
